# EUROPEAN PATENT APPLICATION

(11) **EP 4 299 213 A1**
(43) Date of publication of application: **03.01.2024**
(21) Application number: 23181775.0
(22) Date of filing: 27.06.2023
(51) Int. Cl.: B22F 3/105, B22F 3/15, B22F 5/10, H01M 8/0202, B22F 3/24, B22F 3/11, H01M 4/30, H01M 4/80, H01M 6/48, H01M 10/28

(54) **A METHOD FOR CREATING AN OBJECT**

(30) Priority: 27.06.2022 GB 202209379
(71) Applicant: The Manufacturing Technology Centre Limited, Coventry, West Midlands CV7 9JU (GB)
(72) Inventor: BERMENT-PARR, Iain, Coventry, CV7 9JU (GB); LARKIN, Owen, Coventry, CV7 9JU (GB)
(74) Representative: Forresters IP LLP

(57) **Abstract**

A method for creating an object by consolidating a powder including the following steps:
e) providing a composite including a first material arranged to form a porous structure and a second, sacrificial, material surrounding the first material;
f) surrounding the composite with a powder;
g) forming an intermediate object having a dense part bonded to the composite by densifying and bonding the powder to the composite in a single process; and
h) removing the second material from the intermediate object to form the object, wherein the object includes the porous structure and the dense part bonded to the porous structure.

## Description

### FIELD

The present invention relates to a method for creating an object. In particular, a method for creating an object from a powder and a composite.

### BACKGROUND

Methods for creating objects by consolidating a powder are known. For example, net shape powder consolidation processes or methods are known. An advantage of forming objects this way is that less material is required to form a given object compared to other techniques that often require substantial subtraction of material from a starting solid object to form the same object.

One method of creating such an object by consolidating powder involves cold isostatic pressing. In a first step cold isostatic pressing of the powder is performed to form a green object. This involves using a mould, often made from a flexible material such as rubber, in which the powder is placed and then the mould is pressed (typically by pressing the mould isostatically under a fluid) at ambient temperature to cause the powder to be compacted to form the green object. The green object is porous but has sufficient integrity that it may be handled and take on the shape imparted by the mould. In order to form the object, a second step is required to close the porous cells of the green object through diffusion bonding. This is typically achieved through the application of heat in a process known as sintering. The green object is placed in, for example, a furnace, and the heat causes the compacted material of the green object to density under diffusion bonding and pore closure mechanisms to become a fully dense or solid object. This often causes the green object to shrink in volume as the porosity is eliminated. Deviations in the shape of the object produced compared to a desired shape can be removed through mechanical processes such as machining any such deviations using cutting / grinding tools or the like.

Another method of creating an object is known as hot isostatic pressing to consolidate the powder to form the object. In this process, the powder is placed in a canister having a shape which approximates to the desired shape of the object. Heat and pressure are simultaneously applied to the canister, causing the canister to shrink, whilst maintaining a constant temperature of the powder. This causes the powder to consolidate or density through diffusion bonding to form an object having the form of the canister. The canister is then removed from the object through mechanical and/or chemical processes such as leaching. The resultant object is a fully dense or solid object with limited to zero porosity. Deviations in the shape of the object can be removed through mechanical processes such as machining. An advantage of hot isostatic pressing is that the object is formed as a fully dense object from the powder in a single step.

Another method of forming an object known as field assisted sintering technology (FAST) or spark plasma sintering (SPS) is similar to hot isostatic pressing in that heat and pressure are generated in, and applied to, the powder in order to form the object. FAST involves placing powder inside a die that is shaped to the desired shape of the object to be formed. The die is formed of two or more elements that are electrically conductive, for example, the elements may be made from graphite. The die is compressed, e.g. through hydraulically operated presses, and an electrical current is passed through the die, causing the die and powder to be heated through the Joule effect. This causes the powder to undergo diffusion bonding / sintering to form a fully dense object of the desired shape with minimal to zero porosity. An advantage of FAST is that the object is formed as a fully dense object from the powder in a single step, often with a shorter processing time than required for hot isostatic pressing, but with only uniaxial compaction possible through the dies.

There are limited methods known for forming objects which have may have a controlled porous structure and fully dense part bonded thereto from powder.

### BRIEF DESCRIPTION OF THE INVENTION

According to an aspect of the present disclosure there is provided a method for creating an object by consolidating a powder including the following steps:
a) providing a composite including a first material arranged to form a porous structure and a second, sacrificial, material surrounding the first material;
b) surrounding the composite with a powder;
c) forming an intermediate object having a dense part bonded to the composite by densifying and bonding the powder to the composite in a single process; and
d) removing the second material from the intermediate object to form the object, wherein the object includes the porous structure and the dense part bonded to the porous structure.

Optionally or preferably the composite is a body and the first material is interconnected to form the porous structure, optionally or preferably the body is a green body.

Optionally or preferably the composite is formed by creating a mixture including the first and second materials in powder form, and compacting the mixture to form the body, wherein the first and second materials are of a suitable ratio so that the first material interconnects to form the porous structure and the second material is embedded in the porous structure.

Optionally or preferably, in step a), the composite is a mixture of the first and second material in powder form, and, in step c), the composite is densified so that the first material interconnects to form the porous structure whilst the second material surrounds the porous structure.

Optionally or preferably step c) includes the composite being densified, and the powder being densified and bonded to the composite, in a single process.

Optionally or preferably the method includes forming the object and bonding the object to a starting object to form a composite object, wherein:
a) includes providing the starting object and surrounding a portion of the starting object and/or the composite with the powder;
b) includes densifying and bonding the powder to the starting object and/or the composite to form the intermediate object, wherein the intermediate object has the dense part bonded to the composite and/or the starting object; and
c) includes removing the second material from the intermediate object to form the composite object.

Optionally or preferably, in step b) the starting object, composite and powder are arranged so that, in step c) the starting object is bonded to the composite and the dense part, and the dense part is positioned between the composite and the dense part.

Optionally or preferably the composite includes a surface including one or more formations for defining complementary formations on a surface of the dense part of the intermediate object in step c) and step d) includes the object / composite object having the surface including the complementary formations.

Optionally or preferably the one or more formations include recesses which form complementary projections on the surface of the dense part.

Optionally or preferably the one or more formations are arranged in a pattern that forms a complementary pattern on the surface of the dense part.

Optionally or preferably wherein:
step a) includes providing a former member made from a third, sacrificial material, for shaping or defining a portion of the dense part made from the powder, optionally or preferably the former member is provided as a loose soluble material which is selectively placed relative to the powder and composite in step b) so that, in step c), the former member, formed of the loose soluble material, is densified at the same time that the powder is densified to form and shape the object;
step b) includes arranging the composite relative to the former member so that the former member and composite are in contact with the powder;
in step c) the former member shapes a portion of the dense part; and
in step d) the third material is removed to separate the former member from the dense part of the intermediate object and a surface of the object / composite object is shaped or defined by the former member, wherein optionally or preferably the composite is a part of the former member.

Optionally or preferably the former member includes one or more formations for defining complementary formations on the surface of the dense part of the intermediate object in step c) and step d) includes the object / composite object having the surface including the complementary formations.

Optionally or preferably the one or more formations include recesses which form complementary projections on the surface of the dense part.

Optionally or preferably the one or more formations are arranged in a pattern that forms a complementary pattern on the surface of the dense part.

Optionally or preferably the composite is bonded to the former member by a powder consolidation process, optionally or preferably the powder consolidation process is one of a mechanical pressing process, and a cold isostatic pressing (CIP) process.

Optionally or preferably the second and third materials are the same material.

Optionally or preferably step a) includes forming the composite as a body by providing or creating the porous structure from the first material, and then embedding the porous structure in the second material to close the porous structure.

Optionally or preferably the embedding of the porous structure in the second material includes the porous structure being placed in a solvent in which the second material is dispersed and evaporating the solvent so that the second material crystallises into the porous structure to close the porous structure, optionally or preferably a portion of the second material is removed in step a) to expose a portion of the porous structure and in step b) the powder is in contact with the portion of the porous structure to permit bonding thereto in step c).

Optionally or preferably the embedding of the porous structure in the second material includes the porous structure being surrounded by the second material and applying heat or pressure to cause the second material to compact and be embedded in the porous structure.

Optionally or preferably step c) is performed by applying heat.

Optionally or preferably step c) is performed by applying pressure.

Optionally or preferably step c) is performed using a hot isostatic pressing (HIP) process.

Optionally or preferably step c) is performed using a field assisted sintering technology (FAST) process.

Optionally or preferably the method is for forming a plurality of objects wherein:
a) includes providing a plurality of said composites and spacing the plurality of said composites apart to define a plurality of spaces F therebetween;
b) includes filling the plurality of spaces F with powder;
c) includes densifying the powder within the plurality of spaces F to form a plurality of said intermediate objects in a single process;
d) includes removing the second materials from the plurality of intermediate objects to form the plurality of objects so that each object has a porous structure and dense part bonded to the porous structure.

Optionally or preferably
a) includes providing a plurality of said former members and positioning the plurality of said former members relative to the plurality of spaces F;
b) includes arranging the plurality of said composites relative to the plurality of said former members so that the powder in the plurality of spaces F is in contact with respective ones of the plurality of said composites and the plurality of former members;
c) includes the plurality of said former members shaping or defining respective portions of the dense parts of the plurality of said intermediate objects; and
d) includes the third material being removed to separate the plurality of said former members from the respective dense parts of the plurality of said intermediate objects and respective surfaces of the plurality of objects are shaped or defined by the plurality of said former members.

Optionally or preferably the method is for forming a plurality of said composite objects, wherein:
a) includes providing a plurality of starting objects and positioning respective ones of the plurality of starting objects in the plurality of spaces F;
b) includes the powder in the plurality of spaces F being in contact with respective ones of the plurality of starting objects;
c) includes the densifying and bonding the powder in the plurality of spaces F to the respective ones of plurality of starting objects and the plurality of said composites to form a plurality of said intermediate objects; and
d) removing the second material from the plurality of said intermediate objects to form the plurality of said composite objects.

Optionally or preferably the second and/or third material(s) are soluble materials soluble in a solvent, and step d) includes dissolving the second and/or third materials using a solvent.

Optionally or preferably the object(s) are bipolar plates or unipolar plates for one of hydrogen electrolysers, fuel cells or electrochemical hydrogen compressors.

According to an aspect of the present disclosure there is provided an object created according to a method of any preceding aspect, wherein the object is a bipolar plate or unipolar plate.

According to an aspect of the present disclosure there is provided a method for creating a composite object including a structure including the following steps:
a) providing the structure by interconnecting or forming a first material;
b) embedding the structure with a second, sacrificial, material so that the second material surrounds the structure;
c) surrounding a portion of the structure with a powder or an object;
d) forming an intermediate object by applying heat and/or pressure so that the portion of the structure is bonded to the densified powder or the object in a single process; and
e) removing the second material from the intermediate object to form the composite object, wherein the composite object includes the structure and densified powder or object bonded to the structure.

Optionally or preferably the structure is a porous structure.

Optionally or preferably the structure is made using an additive manufacturing process.

Optionally or preferably step b) includes the structure being placed in a solvent in which the second material is dispersed and evaporating the solvent so that the second material crystallises into the structure, optionally or preferably a portion of the second material is removed in step b) to expose a portion of the structure and in step c) the powder or the object is in contact with the portion of the structure.

A method according to any preceding aspect wherein, optionally or preferably the second and/or third materials are compatible with any heat and/or pressure applied in step c) or step d) to densify the powder so that the porous structure(s) / structure and/or former member(s) maintain retain their integrity in step c) or step d).

A method according to any preceding aspect wherein, optionally or preferably the second and/or third materials each have a melting point which is higher than the temperature required for the powder to density and/or the second / third materials may withstand the pressure applied for the powder to density so that the porous structure / structure / former member(s) retain their integrity in step c) or step d).

A method according to any preceding aspect wherein, optionally or preferably the second and/or third materials may include or consist of an ionic solid, optionally or preferably a soluble salt.

A method according to any preceding aspect wherein, optionally or preferably the second and/or third materials may include or consist of a halide or a halite.

A method according to any preceding aspect wherein, optionally or preferably the second and/or third materials may include or consist of sodium chloride or sodium aluminate.

A method according to any preceding aspect wherein the powder and/or first material is a high temperature metal, optionally or preferably the powder and/or first material is a metal having a melting point equal to or greater than 700°C, equal to or greater than of 950°C, or equal to or greater than 1100°C.

A method according to any preceding aspect wherein heat is applied to densify the powder at a temperature between 500°C to 1600°C.

A method according to any preceding aspect wherein the powder does not include a binder.

### BRIEF DESCRIPTION OF THE FIGURES

In order that the present disclosure may be more readily understood, preferable embodiments thereof will now be described, by way of example only, with reference to the accompanying drawings, in which:
FIGURE 1 is a flow chart embodying a method according to an aspect of the present disclosure;
FIGURE 2 is a schematic diagram of an object that may be made using a method according to an aspect of the present disclosure;
FIGURE 3 is a schematic diagram showing certain components arranged in a certain configuration using a method according to an aspect of the present disclosure for creating the object of figure 2;
FIGURE 4 is a schematic diagram showing a certain object obtained from the method using the configuration shown in figure 3, and also shows a resultant object corresponding to the object shown in figure 2 that is obtained by employing a method on the certain object according to an aspect of the present disclosure;
FIGURE 5 is a magnified image of an object created using a method according to an aspect of the present disclosure;
FIGURE 6 is a schematic diagram of an object that may be created using a method according to an aspect of the present disclosure;
FIGURE 7a shows a plan view of a bipolar plate without the porous structure thereof shown;
FIGURE 7b shows a perspective view of the bipolar plate shown in FIGURE 7a with the porous structure thereof shown;
FIGURE 8 is a schematic diagram of a cross-section of the bipolar plate shown in figures 7a and 7b.
FIGURE 9 is a schematic diagram of certain component parts for use with a method in accordance with an aspect of the present disclosure;
FIGURE 10a is a schematic diagram showing the components of figure 9 in a certain configuration as part of a method in accordance with an aspect of the present disclosure;
FIGURE 10b is a schematic diagram of a bipolar plate created using the configuration shown in figure 10a using a method in accordance with an aspect of the present disclosure;
FIGURE 10c is a schematic diagram of a unipolar plate that may be created using a method in accordance with an aspect of the present disclosure;
FIGURE 11a is a schematic diagram of certain component parts for use with a method in accordance with an aspect of the present disclosure;
FIGURE 11b is a schematic diagram showing the components of figure 11a in a certain configuration as part of a method in accordance with an aspect of the present disclosure;
FIGURE 11c is a schematic diagram of an object created using the configuration shown in figure 11b using a method in accordance with an aspect of the present disclosure;
FIGURE 12 is a schematic diagram showing the components of figure 9 in a certain configuration as part of a method in accordance with an aspect of the present disclosure;
FIGURE 13a is an image of a certain component suitable for use with a method in accordance with an aspect of the present disclosure;
FIGURE 13b is an image of the component shown in figure 13a at a subsequent step of the method in accordance with an aspect of the present disclosure;
FIGURE 13c is an image of the component obtained using the component shown in figure 13b at a subsequent stage of the method in accordance with an aspect of the present disclosure; and
FIGURE 14 is a flow chart embodying a method according to an aspect of the present disclosure.

### DETAILED DESCRIPTION OF THE DISCLOSURE

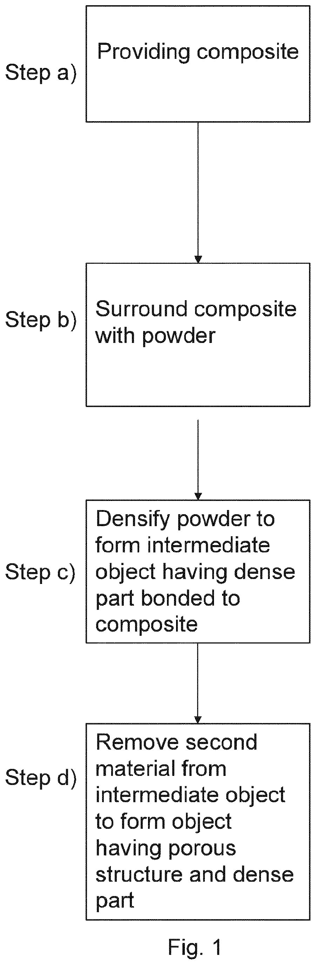

With reference to the flow chart of figure 1, this shows the steps of a method for creating an object according to an aspect of the present disclosure. Step a) includes providing a composite including a first material arranged to form a porous structure and a second, sacrificial, material surrounding the first material. Step b) includes surrounding the composite with a powder. The powder which surrounds the composite may not include any binder material in examples. Step c) includes forming an intermediate object having a dense part bonded to the composite by densifying and bonding the powder to the composite in a single process. Step d) includes removing the second material from the intermediate object to form the object so that the object includes the porous structure and the dense part bonded to the porous structure.

In the present disclosure, the use of the terms consolidate and density in relation to powder to form a dense part denote the powder being consolidated or densified to form the dense part so it has minimal to no porosity present so that the dense part is a fully dense or solid part.

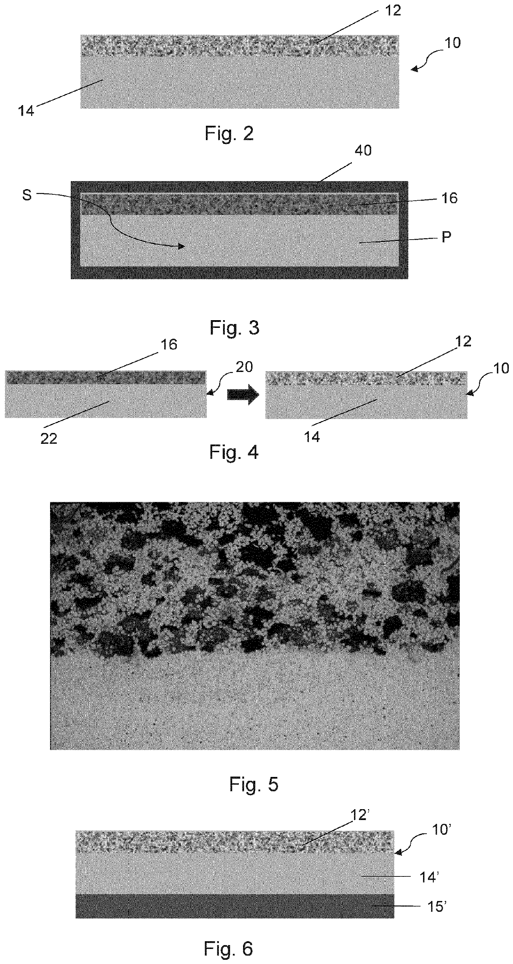

With reference to figures 2 to 4, an example of a method according to the present disclosure to form an object 10 having a porous structure 12 bonded to a dense part 14 will be described. The object 10 is shown schematically in side cross-section in figure 2. The object 10 is generally disc shaped. The porous structure 12 forms an upper section of the object 10 and the dense part 14 forms a lower section of the object 10. In this example, the porous structure 12 is a matrix formed by an interconnected first material. In this example, the first material is titanium. For example, commercially pure titanium (CP-Ti) or titanium alloy Ti-6AI-4V (Ti-64). The titanium is interconnected to form an open cell structure or network. In this example, the dense part 14 is also titanium, e.g. CP-Ti or Ti-64. The dense part 14 is fully dense with a closed cell structure having limited to zero porosity. It will be appreciated that the first material may be other materials, for example, metallic, ceramic or polymer materials. Similarly, the dense part 14 may be formed from a different material, for example, metallic, ceramic or polymer materials. The dense part 14 may be formed from a material which is different to the first material in examples.

For this example, step a) involves providing a composite 16 in the form of a body formed of the first material, in this case titanium, interconnected as a porous structure and which is surrounded by the second material. The porous structure is closed by the second material being embedded in the open cells of the porous structure. The composite 16 is for forming the porous structure 12 of the object 10. The second material may be a soluble material soluble in a solvent. For example, the second material may be sodium chloride or sodium aluminate. A suitable solvent may include or consist of water. In examples, the second material may be other types of materials that are soluble in compatible solvents. The composite 16 is formed by creating a mixture including the first and second materials in powder form, and compacting the mixture to form a body, e.g. by a cold isostatic pressing process using a mould to shape the mixture into the body. According to known techniques (e.g. known for creating porous parts (e.g. porous titanium parts) in the biomedical field using sodium chloride) the first and second materials may be of a suitable ratio in the mixture so that the first material interconnects to form the porous structure and the second material is embedded in the porous structure when the mixture is compacted. For example, a suitable ratio may be 50:50 by volume of first material to second material. The resultant body is a green body.

In this example, the method involves forming the object 10 using a hot isostatic pressing (HIP) process. The process involves providing a canister 40 defining a space S for receiving the composite 16 and powder P. The powder P has no binder material within it. The powder P is a titanium powder for forming the dense part 14 of the object 10. The canister 40 is a relatively simple cylindrical shape made from a tubular section of steel with its open ends respectively closed by a circular sheet of steel welded thereto. Step b) involves, prior to the top of the canister 40 being sealed, pouring powder P into the space S to fill a pre-determined volume, and subsequently placing the composite 16 onto the powder P. The powder P surrounds the lower surface of the composite 16 in this state as can be seen from figure 3.

Step c) will now be described. This involves applying a vacuum to the canister 40 to remove any air or gas, before completely sealing the canister 40. The HIP process is performed using techniques known in the art by applying heat and pressure to the canister 40. This causes the powder P to be densified and to bond to the composite 16. At the same time, the composite 16 is compacted from its green body state.

With reference to figure 4, this results in an intermediate object 20 being formed as shown to the left in figure 4 in a single process, i.e. a single step. The intermediate object 20 has a dense part 22 corresponding to the dense part 14 of the object 10 to be formed, and the composite 16 is bonded to the dense part 22. The composite 16 is for forming the porous structure 12 of the object 10 to be formed. The intermediate object 20 may then be removed from canister 40 using known techniques such as chemical leaching of the canister 40 or mechanically machining away the canister 40.

Step d) involves the object 10 being formed from the intermediate object 20 as shown to the right in figure 4. This involves the second material from the composite 16 being removed. For example, where the second material is a soluble material, e.g. sodium chloride, by using a solvent, e.g. water, the second material may be removed by dissolving it in the solvent, e.g. by placing the intermediate object 20 in a container that is flushed with the solvent. The composite 16 is transformed to leave the porous structure which corresponds to the porous structure 12 of the object. The removal of the second material opens the porous structure. This process leaves the object 10 with the dense part 14 corresponding to the dense part 22 of the intermediate object 20. By way of example, figure 5 is a magnified cross-section view of a portion of an object having been formed according to the described method. It can be seen that the top section of the object is an open cell / porous structure, and the bottom section is a dense part which has a closed cell / solid structure.

It will be appreciated that the arrangements of the composite 16 and powder P within the canister 40 may be arranged differently to create differently structured objects. For example, the composite 16 may be positioned in the middle of the canister 40 with powder P above and below it to form an object having a central porous structure with dense parts bonded to opposite sides of the porous structure.

An advantage of the method described is that it permits a composite object to be created having a porous part and a dense part bonded thereto using a powder. Methods known in the art, e.g. metal injection moulding processes, do not realise such an object through the use of a powder that is densified to form the fully dense part at the same time it is bonded to create the composite object. Advantageously, by providing a composite for which the porous structure is surrounded by a sacrificial material, the sacrificial material protects the porous structure from being damaged during the densification and bonding which occurs in step c) and/or permits a controlled pore size / density to be maintained. Having the sacrificial material removed in a separate step d) allows for the porous structure to be retrieved.

In examples, rather than providing the composite 16 as a body, the composite 16 may be provided as a mixture of the first and second material in powder form. A suitable ratio can be selected as described previously when forming the composite 16 as a body, e.g. a 50:50 ratio by volume of first material to second material. In such examples, the mixture is poured directly onto the powder P within the canister 40 in step b). In step c), the composite 16 is densified so that the first material interconnects to form the porous structure whilst the second material surrounds the porous structure whilst also being bonded to the powder P that is densified in the same process or step. Then, when the second material is removed in step d), the porous structure is opened.

In examples, the composite 16 may be formed as a body by first providing or creating the porous structure from the first material, and then embedding the porous structure in the second material to close the porous structure. For example, the porous structure may be made through additive manufacturing processes to have a relatively complex and delicate shape and the second material may be used to close the porous structure to protect it during the step c) when heat and/or pressure is applied. A portion of the porous structure may be exposed by, for example, grinding or otherwise mechanically removing a portion of the second material so that the exposed portion of the porous structure may contact the powder and form an interface to bond against in step c).

In such examples, the embedding of the porous structure may include the porous structure being placed in a solvent in which the second material is dispersed and evaporating the solvent so that the second material crystallises into the porous structure to close the porous structure. This may, for example, involve a controlled evaporation of brine so that the structure is embedded within a high density salt crystal or polycrystalline structure.

In examples, the embedding of the porous structure in the second material may include the porous structure being surrounded by the second material in powder form and applying a sufficiently low heat or pressure to cause the second material to compact and be embedded in the porous structure without damaging the porous structure.

In examples, a method according to an aspect of the present disclosure includes forming an object and bonding the object to a starting object to form a composite object 10' shown in figure 6. The composite object 10' is cylindrical disc shape similar to object 10 but has a porous structure 12', a dense part 14' and a starting object 15' bonded to the dense part 14'. The object 10' has a top section formed of the porous structure 12', a middle section formed of the dense part 14' and a bottom section formed of the starting object 15'. The porous structure 12' and dense part 14' may be made from the first and second materials described previously. In this case, the starting object 15' is a pre-formed object made, for example, from steel, and the porous structure 12' and dense part 14' are bonded thereto to effectively form a coating over the surface of the starting object 15'. The composite body 10' can be made in a similar way to the object 10 using the composite 16 and powder P as described in relation to figures 3 and 4. The main difference is that the starting object 15' is placed into the canister 40 first, with the powder P poured onto it and then the composite 16 is placed onto the powder P. Step c) is then performed causing the powder P to densify and bond to the starting object 15' and composite 16. The intermediate object thus formed has a dense part bonded to and positioned between the composite 16 and the starting object 15'. The second material is then removed from the intermediate object to leave the composite object 10' shown in figure 6. It will be appreciated that the starting object 15', composite 16 and powder P may be arranged at different relative positions within the canister to created differently structured objects as required.

It will be appreciated that, although step c) has been described using a HIP process, other processes may be utilised. For example, in step c) only heat may be applied, e.g. to sinter the composite 16 and powder P together, or to sinter the composite 16, starting object 15' and powder P together. In examples, in step c) a field assisted sintering technology (FAST) process may be employed.

Examples of a second material suitable with methods of the present disclosure include or consist of soluble materials that are soluble in a solvent, e.g. water. The solvent may include more than one component. An example second material may include or consist of an ionic solid. The ionic solid may be a soluble salt. Examples of a second material include or consist of a halide or a halite. Examples of a second material may include or consist of sodium chloride or sodium aluminate. In examples, other materials that are soluble in different types of compatible solvents as will be appreciated by the skilled reader.

In examples, where the composite 16 is provided as a body, the composite 16 may be configured to form formations on a surface on the dense part of the intermediate object 20 in step c) so that, when the second material is removed from the intermediate object 20 to form the object 10, the object 10 has a dense part 14 including formations on its surface and the porous structure 12 is bonded to the said surface including the formations.

For example, the lower surface of the composite 16 which rests on the powder P may include one or more formations, e.g. recesses, which shape the powder P accordingly. In step c), when the powder P is densified and bonded to the composite 16, the intermediate object 20 formed will have a dense part 22 having a surface having complementary formations, e.g. projections, to the formations of the composite 16. When step d) is performed, the second material is removed leaving the porous structure 12 bonded to the shaped surface of the dense part 22. This method may be used so that the object 10 being formed includes formations on the surface of the dense part 22, e.g. a pattern on the surface of the dense part 22.

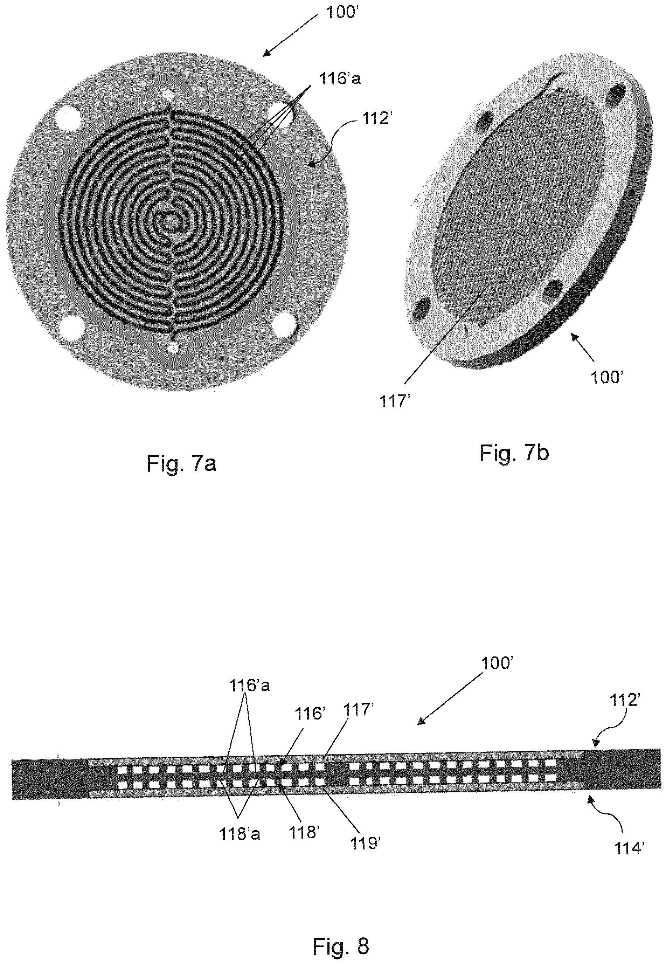

The method according to an aspect of the present disclosure will be described in relation to forming a bipolar plate 100' of a hydrogen electrolyser such as that shown in figures 7a, 7b and 8. Figure 7a is a view of the bipolar plate 100' in plan view without porous structure 117' shown, such that the underlying formations 116'a described below are visible. Figure 7b is a perspective view of the bipolar plate 100' with porous structure 117' shown. Figure 8 is a schematic side cross-section view through the centre of the bipolar plate 100' with porous structure 117' shown. Bipolar plate 100' is a generally circular-shaped disc having first and second opposing surfaces 112', 114' which incorporate respective patterns 116', 118'. Patterns 116', 118' include a plurality of formations 116'a, 118'a in the form of recesses. In this example, bipolar plate 100' is for a hydrogen electrolyser utilising a proton exchange membrane (PEM). Pattern 116' forms flow channels for transporting the hydrogen source, e.g. water, during use. Pattern 118' forms flow channels for transporting the hydrogen produced by the electrolyser during use. The patterns 116', 118' are identical. The formations 116'a, 118'a of the patterns 116', 118' are a series of concentric semi-circular shaped recesses with each successive formation 116'a, 118'a having an incrementally larger diameter when moving in a direction radially away from the respective centres of the surfaces 112', 114'. Each of the surfaces 112', 114' incorporate porous structures 117', 119'. These are often referred to as gas diffusion layers (GDL), or porous transport layers (PTL) in various types of fuel cell and electrolyser. The porous structures 117', 119' permit optimised flow of gas or liquid reactants / products across the surfaces of the bipolar plate 100' and membrane electrode assembly within a fuel cell or electrolyser stack. The porous structures 117', 119' are generally required to have high electrical and thermal conductivity, and high corrosion resistance. The bipolar plate 100' is only an example design of bipolar plate 100' that may be formed using a method according to the present disclosure. It will be appreciated that other designs of bipolar plate 100', e.g. having different shapes, patterns, and/or bipolar plates 100' for use with other types of fuel cell, electrochemical hydrogen compressors or electrolyser equipment, may also be formed according to a method according to the present disclosure. For example, a unipolar plate may also be formed using a method according to the present disclosure. A unipolar plate is similar to a bipolar plate other than only one of its sides / surfaces includes flow channels rather than both of its sides / surfaces. A unipolar plate is typically placed towards the ends of a stack of bipolar plates that form the hydrogen electrolyser / fuel cell / electrochemical hydrogen compressors etc.

In the prior art, due to the highly corrosive environment, high operating temperatures and pressures within Polymer Electrolyte Membrane (PEM) water electrolysis, bipolar plates are typically made from titanium which may also be coated with corrosion resistant coatings. For these reasons, bipolar plates are generally made from widely available commercial titanium sheet or coil (e.g. Grade 2 or Grade 5). The material would typically be cast and wrought into billet prior to being rolled into sheets. The flow channels may be mechanically machined through techniques such as CNC (computer numerical control) machining, mechanical stamping or electrolytic etching. The flow channels may be mechanically machined through subtractive techniques, e.g. CNC (computer numerical control) computer tools, mechanical stamping or chemical etching. The flow channels are geometrically complex patterns and forming them according to prior art techniques requires a high degree of effort, time and cost. Also, the porous structures 117', 119' are typically created separately from the bipolar plates via very different techniques, including weaving of titanium wire into a mesh or partial sintering of titanium powder into a porous sheet. Within an electrolyser or fuel cell membrane electrode assembly the bipolar plates and porous structure mesh / sheets are only mechanically fastened together, rather than being integrally bonded as is achieved by methods described in the present disclosure.

The method of the present disclosure provides an alternative method of creating objects such as the bipolar plate 100', which have a relatively complex shape and/or geometric features, and integrated porous structures, from a powder.

By way of example, the method will be described in relation to creating two bipolar plates 100", 100‴ as part of a single process, i.e. single step, in parallel, with each bipolar plate being identical and being configured in a similar manner to the bipolar plate 100' shown in figure 7.

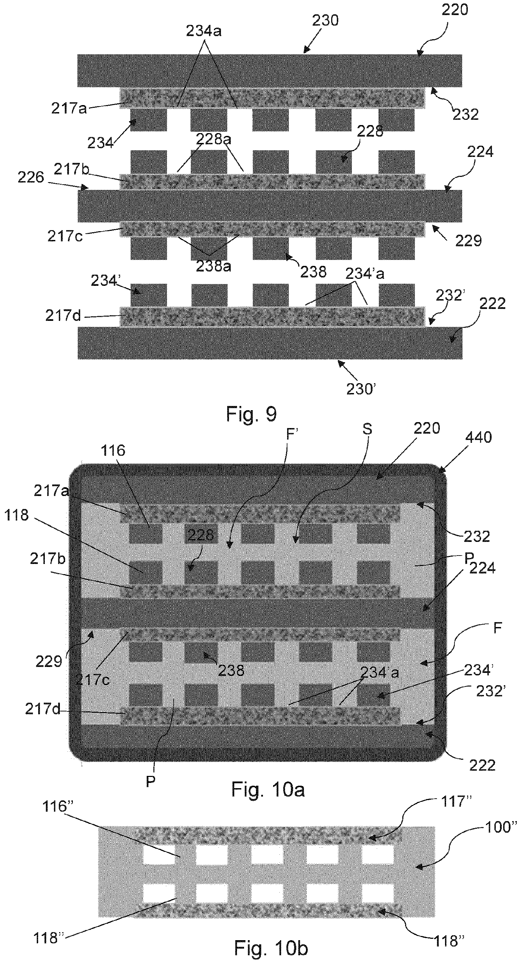

According to a first example, the method will be described with reference to figures 9, 10a and 10b.

According to this example, step a) of the method includes providing first, second and third former members 220, 222, 224, together with composites 217a, 217b, 217c, 217d. The composites 217a, 217b, 217c, 217d are similar to the composite 16 described previously, e.g. each composite includes a first material arranged to form a porous structure and a second, sacrificial, material surrounding the first material. Each composite may be provided as a body or as a mixture of the first and second materials in powder form similar to the examples previously described.

The former members 220, 222, 224 are made from a sacrificial material which, in examples, may be the same sacrificial material that forms the second materials of the composites 217a, 217b, 217c, 217d. In examples, the former members 220, 222, 224 may be made from a sacrificial material that is different to the second materials.

Former members 220, 222, 224 are used to shape first and second bipolar plates 100", 100‴ according to the present method as will be described. In particular, former members 220 and 224 are for forming first bipolar plate 100, and former members 222 and 224 are for forming the second bipolar plate 100‴. First and second bipolar plates 100", 100‴ are identical to, and have the same features as, the bipolar plate 100" shown in figure 8, and features in common between the plates 100", 100‴ share the same reference numeral with the addition of a prime symbol (').

In figure 9, the former members 220, 222, 224 are shown in side view cross-section across the centre of the former members 220, 222, 224. The former members 220, 222, 224 are shown in simplified schematic form for clarity but it should be understood that the former members 220, 222, 224 will have a more complex geometry in practice in order to form the bipolar plates 100", 100"'. In this example, each of the former members 220, 222, 224 may be formed to have one or more sections made from a sacrificial material that is a soluble material which is soluble in a solvent, and the former members 220, 222, 224 may include respective ones of the composites 217a, 217b, 217c, 217d attached to respective the section(s).

Different sacrificial materials to form the former members 220, 222, 224 / be the second material of the composite(s) that are compatible with the method may be used.

For example, the choice of sacrificial material should be compatible with the process used at step c) to density the powder and bond it to the composite in order to form the intermediate object. In particular, so that the former members 220, 222, 224 retain their integrity under any applied heat and/or pressure in step c). By retaining integrity it is meant that the former members 220, 222, 224 retain their original geometric shape without any significant deviations and retain their solidity. For example, the sacrificial material may have a melting point which is higher than the temperature required for the powder to densify and/or the sacrificial material may withstand the pressure applied for the powder to densify so that the former members 220, 222, 224 retain their integrity in step c).

Examples of sacrificial material from which the former members 220, 222, 224 may be soluble materials that are soluble in a solvent, e.g. water.

Examples of sacrificial material include or consist of an ionic solid. The ionic solid may be a soluble salt.

The sacrificial materials may include or consist of a halide or a halite.

The sacrificial materials may include or consist of sodium chloride or sodium aluminate.

The solvent for dissolving the former members 220, 222, 224 may include more than one component.

In examples, the sacrificial materials may be other materials that are soluble in different types of compatible solvents as will be appreciated by the skilled reader.

Former members 220, 222 are generally identical, and so only the former member 220 will be described for reasons of brevity with corresponding features of former member 222 denoted by the same integer with the addition of a prime symbol (').

With reference to figure 9, former member 220 is a generally circular disc having an outwardly facing surface 230 and an inwardly facing surface 232. The outwardly facing surface 230 is flat. The inwardly facing surface 232 includes composite 217a. The composite 217a is a generally circular disc that is smaller in diameter than the main part of the former member 220. Formations 234 are connected to the outwardly facing surface of the composite 217a. Formations 234 define a series of recesses 234a arranged in a pattern. The composite 217a is positioned between the main part of the former member 220 and the formations 234. As will be described, in this example, the formations 234 form a negative of the pattern 116" of the first bipolar plate 100". The recesses 234a are a series of concentric semi-circular shaped recesses with each successive recess 234a having an incrementally larger diameter when moving in a direction radially away from the centre of the surface 232. The composite 217d and formations 234' of the former member 222 are arranged in the same way as those of the former member 220.

With reference to figure 9, former member 224 is a circular disc having opposing surfaces 226, 229. Former member 224 has the same diameter as the former members 220, 222. The surfaces 226, 229 include composites 217b, 217c attached thereto respectively. The composites 217b, 217c are the same shape and configuration as the composite 217a. Similar to former member 220, the outer surfaces of each of the composites 217b, 217c include formations 228, 229 attached or formed therewith respectively. The composites 217b, 217c are positioned between the main part of the former member 224 and their respective formations 228, 229. The formations 228 define a series of recesses 228a arranged in a pattern. The recesses 228a are located and identically shaped to the recesses 234a of former member 220 so that, when the former member 220 is placed above and aligned to the former member 224, with surface 232 facing the surface 226, the recesses 228a, 234a are aligned and congruent with one another. As will be described, the pattern formed by the formations 228 form a negative of the pattern 118" of the first bipolar plate 100". Formations 238 define a series of recesses 238a arranged in the same way as formations 228 and form a negative of the pattern 116"' of the second bipolar plate 100‴. Surface 232' of the former member 222 faces towards the surface 229 during use and its formations 234' define a negative of the pattern 118‴ of the second bipolar plate 100‴ as will be described.

According to the present disclosure, the former members 220, 222, 224 may be formed using different processes.

According to a first process, the former members 220, 222, 224 may be formed by an additive manufacturing process. In this process, an additive manufacturing machine is provided with a digital design, e.g. a 3-D CAD file, for each of the former members 220, 222, 224, and provided with the first material and second sacrificial materials for forming the composites 217a,b,c,d, and the rest of the former members 220, 222, 224 as a feedstock in a form suitable for processing. Each former member 220, 222, 224 is then formed by the machine from the feedstock layer by layer. The composites 217a, 217b, 217c, 217d may be formed by mixing the first and second materials and using this as a feedstock for additively manufacturing these parts of the former members 220, 222, 224. The machine may utilise a binder to bind feedstock together. The skilled person would be aware of compatible binders that may be removed as part of step d) together with the second material. The use of additive manufacturing processes permits former members 220, 222, 224 having relatively complex shapes and geometries to be made.

According to another process, the former members 220, 222, 224 may be made using a powder consolidation process. For example, the composites 217a, 217b, 217c, 217d may each be formed by first creating a mixture of the first and second materials in the manner described previously and mechanically pressing the mixture using a die or stamp to press the mixture into the desired shape. To form the former member 220, a flexible additively manufactured mould having suitable formations to create the formations 234 may be loaded with the sacrificial material suitably layered in powder form with the composite 217a sandwiched between the sacrificial material. The mould may then be cold isostatically pressed so that the former member 220 is formed into a green or compacted body.

The other former members 222, 224 may be formed in a similar way as will be appreciated by the skilled user.

In examples, one or more of the former members 220, 222, 224 may be provided as a loose soluble material, e.g. in the form of a loose powder or soluble crystals, which is surrounded by the powder being consolidated according to the methods of the present disclosure. The soluble material consolidates into the shapes, i.e. the shape of spaces F, F', of the former members 220, 222, 224 shown in figure 10a at the same time that the powder is consolidated so that the powder is correspondingly shaped by the former members 220, 222, 224.

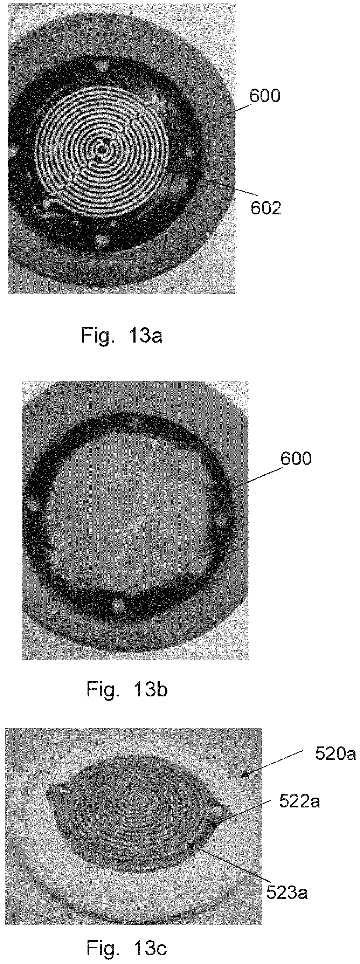

With reference to figures 13a to 13c, these are images from a sample of a former member 520a produced according to the present disclosure. Figures 13a to 13c show different stages of forming former member 520a using a mould and cold isostatic pressing method. Figure 13a shows a mould 600 made from a flexible plastic. The mould 600 includes a series of grooves 602 following the pattern to be created on a bipolar plate. In a first step, these grooves 602 are filled with the sacrificial material in powder form. In this example, the sacrificial material is sodium chloride. In a second step, shown in figure 13b, a mixture of the first and second materials in powder form is placed onto the material for forming a composite 522a. In this example, the first material is the same as the powder P and the second material is sodium chloride. The ratio of the first and second materials is selected so that the first material is arranged to form a porous structure once the former member 520a has been created. In a third step (not shown), the third material, is placed onto the mixture to a predetermined level. In a final step, the arrangement is cold isostatically pressed before removing it from the mould 600. Figure 13c shows the resultant former member 520a with composite 522a attached to its surface. The composite 522a is visible together with projections 523a of the former member 520a that are exposed relative to the surface of the composite 522a.

In examples, the former member 520a could be formed by first forming the main part of the former member 520a, e.g. by cold isostatically pressing or mechanically pressing or otherwise, from the sacrificial material, and then, separately, forming or bonding the composite 522a to the surface of the former member 520a.

For example, the former member 520a may be made according to any of the previously described methods and the composite 522a connected to the former member 520a through cold isostatic pressing, e.g. by providing the composite 552a as a mixture of the first and second materials in powder form and pouring this onto the surface of the former member 520a within a mould that is pressed to bond the composite 552a onto the former member 520a.

In this example, steps b) and c) are performed by applying heat and pressure to densify the powder using a hot isostatic pressing (HIP) process to form the first and second bipolar plates 100", 100‴ from powder P. The powder P is a titanium powder. For example, commercially pure titanium powder (CP-Ti) or the titanium alloy Ti-6AI-4V powder (Ti-64). A suitable sacrificial material for forming the former members 220, 222, 224 / composites 217a-d which is compatible with the use of these titanium powders in the present method is sodium chloride because it maintains high compressive yield strength approaching its melting point of 800°C. Titanium powders which can be consolidated below this temperature are known and are compatible with the use of sodium chloride to form the former members 220, 222, 224 / composites 217a-d. For example, commercial purity alpha titanium (CP-Ti) has been shown to be successfully consolidated in a HIP process to 98.1% density after a 90 minute dwell time at 700°C and an applied pressure of 34 MPa (see B.K Lograsso et al, "Densification of titanium powder during hot isostatic pressing", Metallurgical Transactions A, Volume 19A, 1767-1773, 1988). The present method has been performed using former members / composites 217a-d formed from sodium chloride to density titanium powders around the former members in a HIP process at a temperature of 750°C. Although Ti-6AI-4V powder (Ti-64) is often densified or consolidated in HIP processes having a temperature of 900 - 950°C, the present inventors have found that a four hour dwell time at 750°C with an applied pressure of 35MPa is adequate for consolidating Ti-6AI-4V powder to a satisfactory degree. It has been seen that the former members 220, 222, 224 sufficiently maintain their integrity and shape in order to form the bipolar plates 100", 100‴ to the extent required. Sodium aluminate may also be used as it has a melting point of 1650°C. Other powders for which former members 220, 222, 224 made from sodium chloride or sodium aluminate may be compatible with include aluminium, high purity copper and softer grades of titanium powders. Similarly, a compatible first material for forming the composites 217a, 217b, 217c, 217d are titanium powder (which may be the same as powder P) and a compatible second material for forming the composites, 217a, 217b, 217c, 217d may be sodium chloride or sodium aluminate.

With reference to figure 10a, step b) will be described. The HIP process involves providing a canister 440 defining a space S similar to canister 40 described previously and so will not be described in detail here. Step b) involves placing the former member 222 in the space S so it rests at the bottom of the canister 440 with its surface 232' facing upwards and inwardly towards the space S. The powder P is then poured into the space S to fill the recesses 234'a defined by formations 234' until the powder P reaches a level corresponding to the require mass of each bipolar plate 100", 100‴ in its fully densified state. It can be seen that the composite 217d is arranged relative to the formations 214' to be in contact with the powder P. In this state, the powder P present in the recesses 234'a defined by formations 234' surrounds a portion of the former member 222, i.e. the composite 217d, and is in contact with it, as well as the formations 234' Former member 224 is then placed on the powder P so that the powder P fills a space F between the former member 224 and former member 222. It can be seen that the powder P is in contact with the composite 217c and the formations 238.

Powder P is then poured onto the former member 224 to reach a level corresponding to the required mass of each bipolar plate 100", 100‴ in its fully densified state. Former member 220 is then placed on the powder P in a similar way to that described in relation to former member 224. The powder P fills a space F' defined between the former members 220, 224.

It can be seen that the former members 222 and 224, together with the canister 440 form a space F having a shape that corresponds to the pre-determined shape of the bipolar plates 100", 100‴ (other than the composites thereof). In this example, the space F is for forming an intermediate object from which the first bipolar plate 100" is obtained. Similarly, the former members 220 and 224 form a space F' that is identical to space F. Space F' is for forming an intermediate object from which the second bipolar plate 100" is obtained.

Where one or more of the former members 220, 222, 224 are provided as loose soluble material in examples, then the powder P and the soluble material are selectively placed, e.g. by pouring or layering, in the space S to form the desired shape of the objects to be produced in the spaces F, F'. For example, the soluble material and powder P may be layered within the space S to replicate the shapes shown in figure 10a where the spaces F, F' are filled with the powder P, and the spaces occupied by the former members 220, 222, 224 are filled with the soluble material in powder form. This must be done carefully to avoid or minimise any mixing of the powder P and the soluble material at the interfaces or boundaries between them. In such examples, the composites 217a, 217b, 217c, 217d may be placed at the required positions between the loose soluble material and powder P.

Step c) may now be performed using the HIP process according to techniques known in the art by applying heat and pressure to the canister 440 to densify the powder P within the spaces F and F'. In this process, the powder P within spaces F and F' will also bond to the composites 217a, 217b, 217c, 217d so that respective intermediate objects are formed in the spaces. For example, the intermediate object formed in space F' has a central dense part having opposing sides to which corresponding composites 217a, 217b are bonded, and respective inwardly facing surfaces of the composites 217a, 217b will have corresponding formations 116 and 118 bonded thereto. It can be seen that the former members 220, 222, 224 shape the intermediate objects formed in this process. In this example, for which the powder P is a titanium powder, the heat is applied so that the canister 440 is at a temperature of around 750°C and a pressure of around 35MPa is be applied to the canister 440 for around 2 hours to sufficiently density the powder P. Where other powders are used, the skilled person will be aware of which temperature and pressures are required for a particular powder to densify.

Where the former members 220, 222, 224 are provided as loose soluble material, the soluble material will consolidate or densify into solid objects at the same time as the powder P is consolidated or densified. The soluble material of the former members 220, 222, 224 will hold the spaces occupied within space S whilst this occurs and thus effectively shapes the powder P with the composites 217a, 217b, 217c, 217d bonded thereto into the objects being formed from the powder P in the neighbouring spaces F, F'.

During this process, the former members 220, 222, 224 remain in-situ and due to the heat / pressure applied, there may be some adhering of the former members 220, 222, 224 to the intermediate objects.

After sufficient heat and pressure has been applied to densify the powder P and form the intermediate objects, the intermediate objects together with the former members 220, 222, 224 adhered thereto must be removed from the canister 400. Techniques known in the art may be employed for this purpose, for example, chemically leaching the canister 400 or mechanical cutting the canister 400 away.

Step d) includes separating the intermediate objects from the former members 220, 222, 224. In this example, this involves dissolving the former members 220, 222, 224 using a solvent. In examples for which the former members 220, 222, 224 are made from sodium chloride, a suitable solvent includes water. The skilled person would be aware of other suitable solvents which are compatible with the material from which the former members 220, 222, 224 are made for the purpose of dissolving the former members 220, 222, 224. In this example, for each composite 217a, 217b, 217c, 217d, the second material thereof is the same as the material from which the former members 220, 222, 224 and so the solvent which dissolves the former members 220, 222, 224 also dissolves the second material in the composites 217a, 217b, 217c, 217d to reveal the porous structures thereof. This transforms the intermediate objects into the bipolar plates 100", 100‴. Figure 10b shows a schematic diagram of the bipolar plate 100".

In examples, the composites 217a, 217b, 217c, 217d may not be formed as part of the former members 220, 222, 224. As one example, each of the former members 220, 222, 224 may be formed without the composite present and instead only have the formations extending from their respective surfaces. When the canister 440 is loaded, each composite 217a - d may be provided as a mixture of the first and second materials in a suitable ratio and in powder form, with the mixture being poured onto the former members / powder P. It will be appreciated that this effectively sandwiches or positions the composites between the powder and former members to have the same arrangement as shown in figure 10a. When the powder P is consolidated, the respective mixtures of the composites will also densify whilst also bonding to the powder P. The same resultant intermediate objects may thus be formed as that described previously and from which identical bipolar plates 100", 100‴ may be obtained. Where the former members 220, 222, 224 are provided as loose soluble material, the mixtures of composites 217a, 217b, 217c, 217d may be placed relative to the soluble materials of the former members 220, 222, 224 as the powder P, soluble material and mixtures of the composites are layered within the space S in a similar manner to that described previously. The composite mixtures will consolidate or density with the soluble material into solid objects at the same time as the powder P is consolidated or densified. The soluble material and composite mixtures will hold the spaces occupied within space S whilst this occurs and thus effectively shape the powder P into the objects being formed from the powder P in the neighbouring spaces F, F'.

In examples the second materials of the composites 217a, 217b, 217c, 217d may be different to the materials from which the former members 220, 222, 224 are made. In which case, the former members 220, 222, 224 may be removed using a first solvent, and the second materials may be removed using a different solvent.

In examples, the intermediate objects may have a residual layer of material from the former members 220, 222, 224, e.g. it may have chemically reacted with the exposed surfaces of the intermediate objects, or the exposed surfaces of the intermediate objects to which the material was adhered may have a rough surface. Such residual layers or rough surfaces may be lightly polished through the use of an abrasive slurry or a lightly reactive chemical etchant through techniques known in the art.

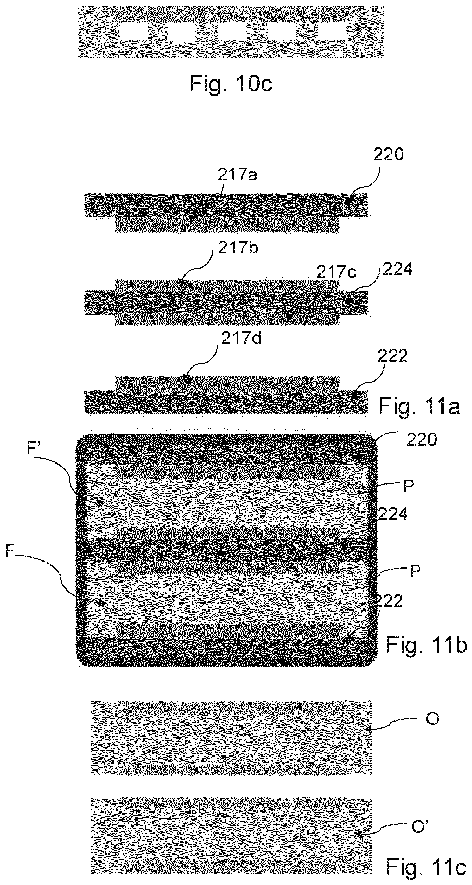

In examples, the present method may also be employed to form unipolar plates. For example, referring to figure 9, former member 224 may be placed centrally within a canister and powder P loaded into the spaces above and below the former member 224. It will be appreciated that those spaces would each have a shape corresponding to that of a unipolar plate without the porous structure. During step c) the composites 217b, 217c would bond to the powder P in these spaces to form two intermediate objects with each object having a composite bonded to a dense part. As will be appreciated by the skilled person, this would result in a unipolar plate having the form shown in figure 10c. Other arrangements, shapes and geometry of former members could be adopted to permit bipolar plates and unipolar plates to be formed in the same process as will be appreciated by the skilled reader based on the present disclosure.

An advantage of the present method is that it permits a bipolar or unipolar plate to be made together with porous transport layers in a single process / step so that the porous transport layers / porous structures are integrally formed with the rest of the bipolar or unipolar plate. In the prior art, the porous transport layers must often be made separately from the bipolar or unipolar plate and the porous transport layers are only mechanically fastened to the rest of the plates within a membrane electrode assembly stack. Furthermore, a plurality of bipolar and/or unipolar plates including the porous transport layers can be made in parallel in a single step by the method described. This permits a lower cost bipolar or unipolar plate to be produced without any significant compromise in performance.

It will be appreciated that former members 220, 222, 224 having different shapes and incorporating composites 217a-d may be used to form objects by consolidating a powder, the objects having dense and porous parts. For example, figure 11a shows relatively simple former members 220, 222, 224 that are disc shaped and which have respective disc shaped composites 217a-d attached to respective surfaces of the former members 220, 222, 224. These can be placed in a canister in a spaced apart relationship as shown in figure 11b to create spaces F, F' in which intermediate objects can be formed when the powder P is consolidated therein under a HIP process. Figure 11c shows the resultant objects O, O' formed after the former members 220, 222, 224 have been removed and the second material of the composites 217a-d has also been removed. The objects O, O' are generally circular shaped discs each having opposite surfaces including the porous structures. The porous structures are integrally formed with the rest of the objects O, O'.

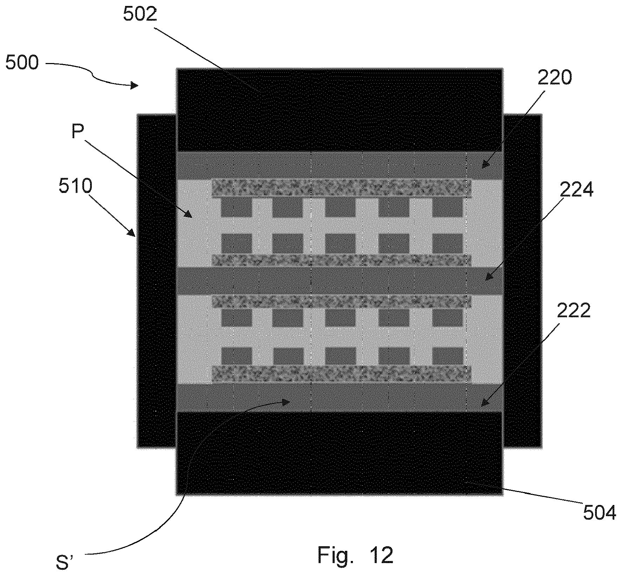

With reference to figure 12, an example of how the present method could be performed to produce a bipolar plates 100", 100‴ shown in figure 10b using a field assisted sintering technology process (FAST) will now be described.

The FAST apparatus will not be described in detail here as its main components are known in the art. For the purpose of this disclosure, only an assembly 500 of the FAST apparatus in which the bipolar plates 100", 100‴ may be formed will be described.

Figure 12 is a schematic cross-section view through the assembly 500. Assembly 500 includes a tubular section 510. The tubular section 510 is open at its ends and defines a space S'. Dies 502, 504 are provided for closing the respective ends of the section 510 and closing the space S'. The dies 502, 504 are identical and generally disc shaped. The dies 502, 504 and the tubular section 510 may be made from an electrically conductive material such as graphite. The dies 502, 504 are connected to a pressing means of the FAST apparatus, e.g. hydraulically operated presses, for driving movement of the dies 502, 504 linearly along the longitudinal or central axis of the tubular section 510.

Former members 220, 222, 224 are identical to those shown in figure 9 and steps a) and b) of the present method may be performed in the same way described in relation to the canister 440 of figure 10.

Step c) is then performed by applying a vacuum to the assembly 500 before sealing it closed. Heat and pressure is than applied to density the powder P. In this case, application of heat denotes heat being generated by applying an electrical current to the dies 502, 504 causing high temperatures at the contacting surfaces of the particles of the powder P due to the Joule heating effect. At the same time, pressure is applied to the powder P by the dies 502, 504 being driven towards the centre of the tubular section 510. This causes the powder P to density to form intermediate objects similar to that described in relation to the HIP process. Where the powder P is CP-Ti or Ti-64, a suitable applied pressure is 35 MPa for 15 minutes once the temperature has stabilised at 750°C. The intermediate objects are made in parallel as part of a single process, i.e. single step.

Step d) involves removing the assembly 500 from the rest of the FAST apparatus and then separating the tubular section 510 and dies 102, 104 in accordance with techniques known in the art. At this stage, the intermediate objects are joined together with the former members 220, 222, 224 as a single body. The intermediate objects can be separated from the former members 220, 222, 224 in a similar way to that described previously. Similarly, the second materials from the intermediate objects may also be removed so that the respective composites are transformed into their respective porous structures thereby forming the bipolar plates 100", 100‴.

The skilled person will appreciate that unipolar plates may be formed using the FAST apparatus using the former member 224 in a similar manner to that described previously.

Depending on the powder, step c) of forming the intermediate objects may be performed by only applying heat, i.e. sintering, rather than also applying pressure.

As will be appreciated, similar to that described previously, instead of the composites being formed as part of the former members 220, 222, 224, as part of a FAST process, the composites may be provided as suitable mixtures of the first and second materials in powder form and the mixtures poured onto the former members 220, 222, 224 / powder P in the same way to obtain the intermediate objects from which the bipolar plates 100", 100‴ may be obtained.

Although the examples described are in relation to forming bipolar or unipolar plates, a number of different types of components or objects may be formed in accordance with a method of the present disclosure. For example, heat exchangers having complex internal channels that may include porous sections could be formed using the present method. Any component part having an enclosed cavity, passage or porous section may be formed in accordance with a method of the present disclosure.

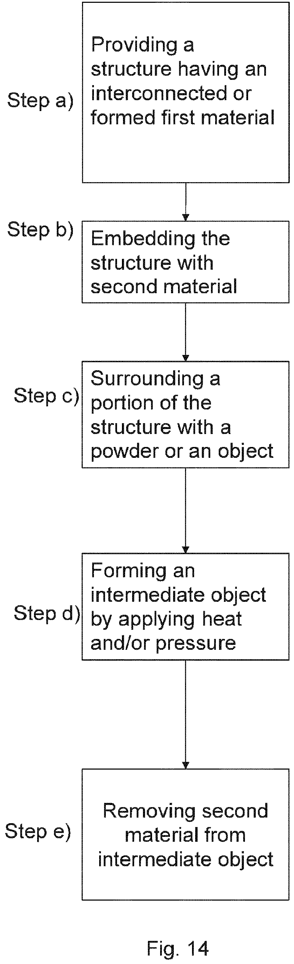

According to an aspect of the present disclosure, a method is provided of creating a composite object including a structure. Figure 14 is a flow chart illustrating the steps of the method. Step a) includes providing the structure by interconnecting or forming a first material. The first material may be the same as the materials discussed in relation to the previous aspect and examples of the present disclosure. Step b) includes embedding the structure with a second, sacrificial, material so that the second material surrounds the structure. The second material may be the same as the materials discussed in relation to the previous aspect and examples of the present disclosure. Step c) includes surrounding a portion of the structure with a powder or an object. Step d) includes forming an intermediate object by applying heat and/or pressure so that the portion of the structure is bonded to the densified powder or the object in a single process. Step d) may involve a HIP or FAST process similar to those discussed previously in order to bond the structure to the densified powder or the object in a manner that will be appreciated by the skilled reader. Step e) includes removing the second material from the intermediate object to form the composite object so that the composite object includes the structure and the densified powder or object bonded to the structure. Similar to the aspect and examples described previously, step e) may include using a solvent to dissolve the second material.

According to the above aspect of the present disclosure, structure denotes different types of structures. In examples, the structure may be a porous structure or may not be a porous structure. In examples, the structure may be made using an additive manufacturing process, for example, by laser powder bed fusion of a powder. In examples, the structure may have different shapes, it may have internal voids or spaces, and/or have a complex shape or configuration, e.g. a helix.

One of the advantages of the present aspect is that it permits a relatively complex or delicate structure to be bonded to a powder whilst the powder is being densified in the same step without damaging the structure. Similarly, where the structure is bonded to an object, this bonding may be achieved without damage to the structure occurring. The use of the second material to embed the structure provides the necessary support and protection of the structure and may advantageously be subsequently removed once the bonding has occurred in step e).

In examples, step b) includes the structure being placed in a solvent in which the second material is dispersed and evaporating the solvent so that the second material crystallises into the structure. This may, for example, involve a controlled evaporation of brine so that the structure is embedded within a high density salt crystal or polycrystalline structure. In such examples, a portion of the second material, e.g. salt crystal, is removed in step b) to expose the portion and, in step c) the powder or the object is in contact with the portion of the structure so that this portion is bonded to the powder or object.

The previously described methods and aspects thereof for which a powder surrounds the composite or structure to form a dense part may preferably not include a binder material.

The previously described methods and aspects thereof may be particularly suited for creating objects having dense and porous parts from metal powders with high temperature melting points, i.e. high temperature metals. For example, melting points which are equal to or greater than 700°C, equal to or greater than of 950°C, or equal to or greater than 1100°C.

The step of densification of the powder, e.g. steps b) and d) respectively of the methods described, may involve the application of heat to the powder at a suitable temperature for densification of the powder to occur. For example, the temperature may be between 500°C to 1600°C . The sacrificial material may be selected based on having a melting point which is suitable for use with the temperature at step b). The temperature applied may be up to the melting point of the sacrificial material. For example, for methods in which higher temperatures are applied in densification steps b) and step d) of the previous methods, then the sacrificial material selected is accordingly one having a higher melting point compatible with the higher temperatures being applied.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A method for creating an object by consolidating a powder including the following steps:
a) providing a composite including a first material arranged to form a porous structure and a second, sacrificial, material surrounding the first material;
b) surrounding the composite with a powder;
c) forming an intermediate object having a dense part bonded to the composite by densifying and bonding the powder to the composite in a single process; and
d) removing the second material from the intermediate object to form the object, wherein the object includes the porous structure and the dense part bonded to the porous structure.

2. A method according to claim 1 wherein:
in step a), the composite is a body and the first material is interconnected to form the porous structure, optionally or preferably the body is a green body and optionally the composite is formed by creating a mixture including the first and second materials in powder form, and compacting the mixture to form the body, wherein the first and second materials are of a suitable ratio so that the first material interconnects to form the porous structure and the second material is embedded in the porous structure; or
in step a), the composite is a mixture of the first and second material in powder form, and, in step c), the composite is densified so that the first material interconnects to form the porous structure whilst the second material surrounds the porous structure, optionally or preferably step c) includes the composite being densified, and the powder being densified and bonded to the composite, in a single process.

3. A method according to any preceding claim including forming the object and bonding the object to a starting object to form a composite object, wherein:
b) includes providing the starting object and surrounding a portion of the starting object and/or the composite with the powder;
c) includes densifying and bonding the powder to the starting object and/or the composite to form the intermediate object, wherein the intermediate object has the dense part bonded to the composite and/or the starting object; and
d) includes removing the second material from the intermediate object to form the composite object, optionally or preferably in step b) the starting object, composite and powder are arranged so that, in step c) the starting object is bonded to the composite and the dense part, and the dense part is positioned between the composite and the dense part.

4. A method according to claim 2 or 3 wherein the composite includes a surface including one or more formations for defining complementary formations on a surface of the dense part of the intermediate object in step c) and step d) includes the object / composite object having the surface including the complementary formations, and optionally or preferably the one or more formations include recesses which form complementary projections on the surface of the dense part and/or the one or more formations are arranged in a pattern that forms a complementary pattern on the surface of the dense part.

5. A method according to any preceding claim wherein:
step a) includes providing a former member made from a third, sacrificial, material, for shaping or defining a portion of the dense part made from the powder, or optionally or preferably the former member is provided as a loose soluble material which is selectively placed relative to the powder and composite in step b) so that, in step c), the former member, formed of the loose soluble material, is densified at the same time that the powder is densified to form and shape the object;
step b) includes arranging the composite relative to the former member so that the former member and composite are in contact with the powder;
in step c) the former member shapes a portion of the dense part; and
in step d) the third material is removed to separate the former member from the dense part of the intermediate object and a surface of the object / composite object is shaped or defined by the former member, wherein optionally or preferably the composite is a part of the former member, and optionally or preferably:
the former member includes one or more formations for defining complementary formations on the surface of the dense part of the intermediate object in step c) and step d) includes the object / composite object having the surface including the complementary formations, and optionally or preferably the one or more formations include recesses which form complementary projections on the surface of the dense part and/or the one or more formations are arranged in a pattern that forms a complementary pattern on the surface of the dense part; and/or
the composite is bonded to the former member by a powder consolidation process, optionally or preferably the powder consolidation process is one of a mechanical pressing process, and a cold isostatic pressing (CIP) process.

6. A method according to claim 1 or 2, or any one of claims 3 to 5 when directly or indirectly dependent on claim 1 or 2, wherein step a) includes forming the composite as a body by providing or creating the porous structure from the first material, and then embedding the porous structure in the second material to close the porous structure, optionally or preferably wherein the embedding of the porous structure in the second material includes:
(i) the porous structure being placed in a solvent in which the second material is dispersed and evaporating the solvent so that the second material crystallises into the porous structure to close the porous structure, optionally or preferably a portion of the second material is removed in step a) to expose a portion of the porous structure and in step b) the powder is in contact with the portion of the porous structure to permit bonding thereto in step c), or
(ii) the porous structure being surrounded by the second material and applying heat or pressure to cause the second material to compact and be embedded in the porous structure.

7. A method according to any preceding claim wherein step c) is performed by applying heat, or wherein step c) is performed by applying heat and pressure.

8. A method according to any preceding claim wherein step c) is performed using a hot isostatic pressing (HIP) process, or wherein step c) is performed using a field assisted sintering technology (FAST) process.

9. A method according to any preceding claim for forming a plurality of objects wherein:
a) includes providing a plurality of said composites and spacing the plurality of said composites apart to define a plurality of spaces F therebetween;
b) includes filling the plurality of spaces F with powder;
c) includes densifying the powder within the plurality of spaces F to form a plurality of said intermediate objects in a single process;
d) includes removing the second materials from the plurality of intermediate objects to form the plurality of objects so that each object has a porous structure and dense part bonded to the porous structure.

10. A method according to claim 9 when directly or indirectly dependent on claim 5, wherein:
a) includes providing a plurality of said former members and positioning the plurality of said former members relative to the plurality of spaces F;
b) includes arranging the plurality of said composites relative to the plurality of said former members so that the powder in the plurality of spaces F is in contact with respective ones of the plurality of said composites and the plurality of former members;
c) includes the plurality of said former members shaping or defining respective portions of the dense parts of the plurality of said intermediate objects; and
d) includes the third material being removed to separate the plurality of said former members from the respective dense parts of the plurality of said intermediate objects and respective surfaces of the plurality of objects are shaped or defined by the plurality of said former members.

11. A method according to claim 9 or 10 when directly or indirectly dependent on claim 3, to form a plurality of said composite objects, wherein:
a) includes providing a plurality of starting objects and positioning respective ones of the plurality of starting objects in the plurality of spaces F;
b) includes the powder in the plurality of spaces F being in contact with respective ones of the plurality of starting objects;
c) includes the densifying and bonding the powder in the plurality of spaces F to the respective ones of plurality of starting objects and the plurality of said composites to form a plurality of said intermediate objects; and
d) includes removing the second material from the plurality of said intermediate objects to form the plurality of said composite objects.

12. A method according to any preceding claim wherein the second and/or third material(s) are soluble materials soluble in a solvent, and step d) includes dissolving the second and/or third materials using a solvent; and/or wherein the object(s) are bipolar plates or unipolar plates for one of hydrogen electrolysers, fuel cells or electrochemical hydrogen compressors.

13. An object created according to the method of any preceding claim, wherein the object is a bipolar plate or unipolar plate.

14. A method for creating a composite object including a structure including the following steps:
a) providing the structure by interconnecting or forming a first material;
b) embedding the structure with a second, sacrificial, material so that the second material surrounds the structure;
c) surrounding a portion of the structure with a powder or an object;
d) forming an intermediate object by applying heat and/or pressure so that the portion of the structure is bonded to the densified powder or the object in a single process; and
e) removing the second material from the intermediate object to form the composite object, wherein the composite object includes the structure and densified powder or object bonded to the structure, and
optionally or preferably the method may include one or more of.
(i) wherein the structure is a porous structure;
(ii) wherein the structure is made using an additive manufacturing process; and
(iii) wherein step b) includes the structure being placed in a solvent in which the second material is dispersed and evaporating the solvent so that the second material crystallises into the structure, optionally or preferably a portion of the second material is removed in step b) to expose a portion of the structure and in step c) the powder or the object is in contact with the portion of the structure.

15. A method according to any preceding claim including one or more of:
(i) wherein the second and/or third materials are compatible with any heat and/or pressure applied in step c) or step d) to density the powder so that the porous structure(s) / structure and/or former member(s) maintain retain their integrity in step c) or step d);
(ii) wherein the second and/or third materials each have a melting point which is higher than the temperature required for the powder to densify and/or the second / third materials may withstand the pressure applied for the powder to density so that the porous structure/ structure / former member(s) retain their integrity in step c) or step d);
(iii) wherein the second and/or third materials may include or consist of an ionic solid, optionally or preferably a soluble salt;
(iv) wherein the second and/or third materials may include or consist of a halide or a halite;
(v) the second and/or third materials may include or consist of sodium chloride or sodium aluminate;
(vi) wherein heat is applied to density the powder at a temperature between 500°C to 1600°C;
(vii) wherein the second and third materials are the same material and
(viii) wherein the powder does not include a binder.
